# EUROPÄISCHE PATENTANMELDUNG

(11) **EP 0 742 112 A2**
(43) Veröffentlichungstag der Anmeldung: **13.11.1996**
(21) Anmeldenummer: 96107031.5
(22) Anmeldetag: 04.05.1996
(51) Int. Cl.: B60B 31/02

(54) **Verfahren und Vorrichtung zum Einspeichen eines Rades mit einer Nabe und Speichen**

(30) Priorität: 10.05.1995 DE 19517100
(71) Anmelder: Golz, Günter, 33449 Langenberg (DE)
(72) Erfinder: Golz, Günter, 33449 Langenberg (DE)
(74) Vertreter: Rehberg, Elmar, Dipl.-Ing.

(57) **Zusammenfassung**

Bei einem Verfahren zum Zusammenbau eines Rades aus einer Felge (11), einer Nabe (14) und einer Mehrzahl von Speichen (15) und Nippeln (16) werden die Speichen (15) durch Löcher in der Nabe (14) und in der Felge (11) hindurchgeführt und die Nippel (16) auf die mit Gewinde versehenen Enden der Speichen (15) nur um einige wenige Umdrehungen aufgedreht. Die so vormontierte Einheit wird ohne Fixierung der Nabe (14) lediglich mittels der Felge (11) für jede Speiche (15) einzeln nacheinander relativ zu einem Schraubwerkzeug (25) mit Klinge (33) so ausgerichtet, daß die Achse der jeweiligen Speiche (15) mit der Achse der Klinge (33) des Schraubwerkzeuges (25) in etwa fluchtet. In jeder der ausgerichteten Relativlagen wird der jeweilige Nippel (16) unter Entstehen von Spannung am freien Ende der jeweiligen Speiche (15) individuell fertig derart weiter aufgedreht, daß alle Nippel (16) oder zumindest alle Nippel einer Radseite um ein vorher festgelegtes gemeinsames Maß auf die Enden ihrer zugehörigen Speichen (15) aufgedreht sind.

## Beschreibung

Die Erfindung betrifft ein Verfahren zum Zusammenbau eines Rades aus einer Felge, einer Nabe und einer Mehrzahl von Speichen und Nippeln, indem die Speichen durch Löcher in der Nabe und in der Felge hindurchgeführt und die Nippel auf die mit Gewinde versehenen Enden der Speichen aufgedreht werden. Es wird auch eine Vorrichtung zur Durchführung des Verfahrens aufgezeigt, die eine Nippelaufsetzstation, eine Spannstation und eine Korrekturstation aufweist. Die Erfindung läßt sich für Räder aller Art anwenden und ist für Vorderräder wie auch für angetriebene Hinterräder von Fahrrädern, aber auch für Räder von Rollstühlen u. dgl. anwendbar.

Räder der angesprochenen Art werden bekanntlich in der Weise zusammengebaut, daß zunächst die Speichen durch die Löcher der Nabe gesteckt, jeweils einzeln durch die Löcher in einer Felge hindurchgeführt und dann Nippel auf die mit Gewinde versehenen Enden der Speichen aufgedreht werden. Dabei entsteht eine Spannung in den Speichen, so daß die Felge möglichst rund um die Achse der Nabe laufend aufgespannt wird. Dieser Zusammenbauvorgang kann von Hand durchgeführt werden. Es sind jedoch für die einzelnen Verfahrensschritte auch Spezialmaschinen bekannt, die Teile dieser aufgezeigten Arbeiten erledigen. Solche Spezialmaschinen sind relativ aufwendig konstruiert. Sie müssen für die verschiedenen Größen und Arten von Rädern jeweils genau eingestellt werden. Es spielt auch eine Rolle, ob z. B. eine Flachbettfelge oder eine Hohlkammerfelge, eine Felge aus Aluminium oder eine Felge aus Stahlblech montiert wird. Die Umrüstarbeiten der bekannten Maschinen erfordern eine erhebliche Zeit, die oft bis zu einem ganzen Arbeitstag reichen kann, um letztendlich in einer Serie das gewünschte Arbeitsergebnis zu erzielen. Schon eine einzelne Umstellung auf eine andere Laufradgröße läßt wiederum einen ganzen Arbeitstag Umrüstzeit anfallen. Insoweit sind solche Maschinen an sich nur in der Großserie bei einigen wenigen Betrieben anwendbar, die sich auf die Laufradmontage spezialisiert haben. Für den einzelnen Fahrradhändler, der beispielsweise zehn Fahrräder in der Serie aufbaut oder ein Laufrad für ein Fahrrad zu erstellen hat, sind solche Maschinen unrentabel und daher nicht einsetzbar.

Der Erfindung liegt die Aufgabe zugrunde, ein Verfahren und eine Vorrichtung zu schaffen, mit der Räder unterschiedlicher Abmessungen und aus unterschiedlichen Materialien auch bei kleinen Serien komplett fertig montiert bzw. zusammengebaut werden können.

Erfindungsgemäß wird dies bei dem Verfahren der eingangs beschriebenen Art dadurch erreicht, daß die Nabe und die Felge in einer Nippelaufsetzstation zunächst in eine ungefähr konzentrische Relativlage zueinander gebracht und die Nippel auf die mit Gewinde versehenen Enden der durch die Löcher in der Nabe und der Felge hindurchgeführten Speichen nur um einige wenige Umdrehungen aufgedreht werden, daß die so vormontierte Einheit ohne Fixierung der Nabe lediglich mittels der Felge für jede Speiche einzeln nacheinander relativ zu einem Schraubwerkzeug mit Klinge so ausgerichtet wird, daß die Achse der jeweiligen Speiche mit der Achse der Klinge des Schraubwerkzeuges in etwa fluchtet, und daß in jeder der ausgerichteten Relativlagen der jeweilige Nippel unter Entstehen von Spannung am freien Ende der jeweiligen Speiche individuell fertig derart weiter aufgedreht wird, daß alle Nippel oder zumindest alle Nippel einer Radseite um ein vorher festgelegtes gemeinsames Maß auf die Enden ihrer zugehörigen Speichen aufgedreht sind.

Die Erfindung geht von dem Gedanken aus, die einzelnen Schritte des Zusammenbaus in bestimmter Weise voneinander zu trennen und auch anders als bisher durchzuführen. So geht es in einem ersten Arbeitsschritt ausschließlich darum, die Nippel auf die mit Gewinde versehenen Enden der Speichen aufzusetzen, nachdem sie durch die Löcher der Nabe einerseits und der Felge andererseits hindurchgeführt sind. Dabei geht es darum, die einzelnen Nippel nur um einige wenige Umdrehungen auf das Ende der jeweiligen Speiche aufzudrehen, und zwar so, daß gerade keine Spannung zwischen Nabe und Felge entsteht. Dies wird in der Weise durchgeführt, daß auch nur eine ungefähr konzentrische Relativlage zwischen Nabe und Felge einzuhalten ist. In einem davon getrennten zweiten Verfahrensschritt erfolgt das Spannen, also das Anziehen der Nippel soweit, daß in ihnen Zugspannung entsteht und das Rad damit seine feste Gestalt bekommt. Die Erfindung nutzt den Gedanken, daß die Länge der Speichen und die Abmessungen der Nippel - zumindest in einer Serie - eine gute Konstanz aufweist, so daß es möglich ist, die Nippel nicht mehr drehmomentgesteuert anzuziehen, sondern eine bestimmte geometrische Endlage des Nippels am Speichenende als Maß für die aufzubringende Spannung zu nehmen. Zu diesem Zweck wird jeder Nippel mit der Klinge eines Schraubwerkzeuges und ohne Fixierung der Nabe soweit angezogen, bis dieses vorher festgelegte Maß der Relativlage jedes Nippels an jedem Speichenende erreicht ist. Dieses festgelegte gemeinsame Maß ergibt sich aus Erfahrungswerten. Auch in einer kleinen Serie ist dieses Maß mit einiger Geschicklichkeit sehr schnell auffindbar bzw. annäherbar. Die Einhaltung dieses Maßes ergibt den Vorteil, daß alle Speichen des Rades in der gleichen Weise angezogen sind und somit das Rad rein theoretisch bereits den idealen Rundlauf ohne Seiten- und Höhenschlag aufweisen müßte. In der Praxis läßt sich dies aufgrund von Toleranzen an den zusammenzubauenden Bauteilen nicht immer genau einhalten, jedoch ergibt sich ein erstaunlich gutes Arbeitsergebnis, d. h. die auf diese Weise erst im zweiten Verfahrensschritt gespannten Laufräder weisen ein überraschend hohes Maß an Rundlauf auf und müssen insoweit nur noch vergleichsweise wenig korrigiert werden. Diese Korrektur, mit der geringfügige Höhen- und/oder Seitenschläge korrigiert werden, geschieht in einem dritten Arbeitsgang, wenn dies erforderlich ist. Bei Rädern mit symmetrischen Aufbau der beiden Speichenreihen rechts und links zu der von der Felge aufgespannten Ebene wird auch der Versatz der Löcher im Bett der Felge symmetrisch sein, so daß insoweit auch ein übereinstimmendes gemeinsames festgelegtes Maß für die beiden Speichenreihen Anwendung findet. Beim Spannen, also beim Aufdrehen der Nippel in ihre endgültige Endlage am Speichenende, muß die Achse der Speiche und des Nippels nur in etwa mit der Achse der Klinge eines Schraubwerkzeuges in fluchtende Relativlage gebracht werden. Es können dabei auch durchaus unterschiedliche Relativlagen für die beiden Speichenreihen rechts und links angewendet werden. Es muß lediglich sichergestellt sein, daß der Aufschraubvorgang gezielt bis zu seinem jeweiligen Ende durchgeführt werden kann. Wenn dagegen Räder montiert werden, bei denen die beiden Speichenreihen zu der von der Felge aufgespannten Ebene nicht symmetrisch angeordnet sind, wie dies beispielsweise bei über eine Kettenschaltung mit Zahnkränzen angetriebenen Hinterrädern der Fall ist, kann es sinnvoll sein, für jede Speichenreihe rechts und links jeweils ein unterschiedliches gemeinsames Maß festzulegen und einzuhalten. Dies kann dann dazu führen, daß jede Speiche in der Speichenreihe zwar eine übereinstimmende Spannung erhält, jedoch die Speichen der beiden Speichenreihen zueinander unterschiedlich hart gespannt sind.

Es erleichtert den Zusammenbau erheblich, wenn die Räder satzweise eingespeicht werden und nach einer Kontrolle des zuerst eingespeichten Rades das vorher festgelegte gemeinsame Maß ggfs. korrigiert wird. Beim Einspeichen, also beim Zusammenbau - auch in der kleinen Serie - werden zunächst die Nippel auf die Räder ohne Entstehung von Spannung aufgesetzt. Dann wird das erste Rad der Serie gespannt, und es erfolgt eine Kontrolle des Arbeitsergebnisses, worauf ggfs. das angewendete, vorher festgelegte gemeinsame Maß ggfs. korrigiert wird. Es versteht sich, daß sodann das korrigierte Maß Anwendung findet.

Am Ende des Einspeichens wird das Rad auf einen Höhen- und Seitenschlag überprüft und ggfs. individuell korrigiert.

Die Vorrichtung zur Durchführung des Verfahrens ist mit einer Nippelaufsetzstation, einer Spannstation und einer Korrekturstation versehen und kennzeichnet sich erfindungsgemäß dadurch, daß die Nippelaufsetzstation eine Aufnahmeeinrichtung zum ungefähren Festlegen der Achse der Nabe, Führungsrollen für die ungefähre Zentrierung der Felge relativ zur Achse der Nabe sowie einen Schrauber zum Aufdrehen der Nippel um einige wenige Umdrehungen aufweist, daß die Spannstation zwei Ausrichtrollen für die Felge und einen V-förmigen Anschlag für die Positionierung des jeweiligen Nippels mit Speiche mit ihrer Achse relativ zu der Achse der Klinge eines Schraubwerkzeuges aufweist, und daß das Schraubwerkzeug mit einer Einstellvorrichtung zur Beendigung des Aufdrehvorgangs beim Erreichen einer vorher festgelegten Relativlage zwischen Speichenende und Nippel versehen ist.

Die drei aufgezeigten Stationen sind an der Vorrichtung vorhanden, so daß die drei Arbeitsschritte nacheinander satzweise durchgeführt werden können, und zwar auch bei kleinen Serien, ja sogar bei Einzelanfertigungen. Die Nippelaufsetzstation ist mit einer Aufnahmeeinrichtung für die Achse der Nabe sowie Führungsrollen für die ungefähre Zentrierung der Felge relativ zur Achse der Nabe versehen. Wenn drei Führungsrollen vorgesehen sind, ist zumindest eine der Führungsrollen verstellbar, um unterschiedlichen Felgengrößen Rechnung zu tragen. Auch die Aufnahmeeinrichtung ist verstellbar, wobei es auf eine genaue Einstellung jedoch nicht ankommt. Zu der Nippelaufsetzstation gehört schließlich noch ein Schrauber mit Klinge, mit dem die Nippel um einige wenige Umdrehungen - ohne Entstehung von Spannung - auf die mit Gewinde versehenen Enden der Speichen aufgedreht werden. In der Spannstation sind nun zwei Ausrichtrollen für die Felge und ein V-förmiger Anschlag für die Positionierung des jeweiligen Nippels vorgesehen und zwar so relativ zu der Achse der Klinge eines Schraubwerkzeuges, daß mit der Klinge des Schraubwerkzeuges die Schlitzung des Nippels ergreifbar ist. Die Achse der Speiche und des Nippels muß in etwa fluchtende Anordnung zur Achse des Schraubwerkzeuges gebracht werden, wobei die Achse des Schraubwerkzeuges unverändert feststeht, beispielsweise vertikal ausgerichtet ist. Die Ausrichtrollen und der Anschlag sind so angeordnet, daß in Achsrichtung des Schraubwerkzeuges etwa die gleiche Relativlage an jedem Nippel erreicht wird. Dies ist wenigstens für eine Speichenreihe der Fall Oft ist es aber nicht erforderlich, zwischen den beiden Speichenreihen eines Rades zu unterscheiden. Wesentlich ist eine Einstellvorrichtung an dem Schraubwerkzeug, die zur gezielten Beendigung des Aufdrehvorganges dient, und zwar dann, wenn das vorher festgelegte gemeinsame Maß erreicht ist. Damit werden übereinstimmende Verhältnisse in der Relation Nippel zu Speiche hergestellt. Aus diesen übereinstimmenden Verhältnissen kann auf übereinstimmende Zugspannung in der Speiche geschlossen werden, woraus ein ausgezeichneter Rundlauf der Felge relativ zur Achse der Nabe resultiert. Notwendige Korrekturen des Höhen- und/oder Seitenschlages erstrecken sich damit auf ein Minimum.

Die wesentlichen Vorteile der neuen Vorrichtung sind darin zu sehen, daß durch die Zusammenfügung der drei Stationen die Vorrichtung auf kleinem Platz unterbringbar ist und sie sehr kurze Umrüstzeiten für andere Radgrößen u. dgl. erfordert. Erstaunlicherweise erbringt die Vorrichtung eine große Genauigkeit beim Spannen, so daß nur noch vergleichsweise sehr viel weniger Korrekturarbeiten erforderlich sind. Die einzelnen Stationen lassen sich leicht und sinnfällig bedienen und jede Station kann individuell genutzt werden. Die Vorrichtung weist wenige Einzelteile auf, die bei Verschleiß auch leicht ersetzt werden können. Die einzelnen Stationen können individuell auf Körpergröße eingestellt werden. Damit wird gleichsam eine Universalvorrichtung geschaffen, die in drei Stationen den kompletten, fertigen Zusammenbau eines Rades aus einer Felge, einer Nabe und einer Mehrzahl von Speichen und Nippeln gestattet.

Die Nippelaufsetzstation kann im wesentlichen horizontal ausgerichtet und damit mit etwa vertikaler Achse der Nabe, die Spannstation im wesentlichen vertikal ausgerichtet und damit mit etwa horizontaler Achse der Nabe sowie die Korrekturstation an einem gemeinsamen Ständer angeordnet sein. Durch die Zusammenfassung dieser drei Stationen an einem gemeinsamen Ständer entsteht ein handliches Gerät mit wenig Raumbedarf, welches auch ohne weiteres noch in einer Fahrradwerkstatt unterbringbar ist. Die Stationen sind so angeordnet, daß sie relativ wenig ausladen und andererseits der jeweilige Verfahrensschritt sicher und entsprechend den Gegebenheiten ausgeführt werden kann. Die Korrekturstation ist in der Weise angeordnet, daß die Achse der Nabe horizontal festgelegt ist.

Die Korrekturstation kann eine Spanneinrichtung zur Aufnahme der Achse der Nabe und je eine Anzeigeeinrichtung für den Höhenschlag und für den Seitenschlag aufweisen. Damit kann gleichzeitig ein Höhen- und Seitenschlag festgestellt und korrigiert werden.

Das Schraubwerkzeug der Spannstation ist vorteilhaft mit vertikal angeordneter Achse an dem gemeinsamen Ständer vorgesehen, damit die Bewegungsrichtung der Klinge des Schraubwerkzeuges mit der Erstreckungsrichtung der Speiche in etwa übereinstimmt und insoweit auch durch das Spannen bewirkte Deformationen der Felge in der von der Felge aufgespannten Ebene wirksam werden. Die vertikale Ausrichtung der Spannstation ist platzsparend und ergonomisch.

Dem V-förmigen Anschlag für die Positionierung des jeweiligen Nippels mit Speiche für die Speichen der einen Laufradseite mit ihrer Achse relativ zu der Achse der Klinge eines Schraubwerkzeuges ist ein einstellbarer Anschlag für die Felge und damit für die Speichen der anderen Laufradseite zugeordnet. Der V-förmige Anschlag findet immer Anwendung, zumindest für die eine Felgenreihe. Insbesondere bei dem Einsatz einer Felge aus Aluminium darf der der Nabe zugekehrte Teil der Felge nicht mit dem V-förmigen Anschlag in Kontakt kommen, weil sonst Beschädigungen an der Oberfläche der Felge auftreten. Insoweit ist es erforderlich, beim Spannen die Felge mit einem Abstand zu dem V-förmigen Anschlag auf den Ausrichtrollen zu positionieren, so daß die Entfernung der Nippelschlitzung von dem V-förmigen Anschlag größer wird, so daß sich insoweit die Schräglage der Speichen in einer veränderten Relativlage der jeweiligen Nippel der beiden Speichenreihen zueinander bemerkbar macht. Insoweit ist es nicht mehr möglich, den V-förmigen Anschlag zur Positionierung der Nippel beider Speichenreihen zu nutzen. Hier greift der zusätzliche verstellbare Anschlag ein. Der V-förmige Anschlag wird für die Positionierung der einen Speichenreihe und der einstellbare Anschlag für die Positionierung der anderen Speichenreihe genutzt. Beide Anschläge kommen dabei gleichsam automatisch zur Wirkung und zur Anwendung, nur abhängig davon, welche Speiche bzw. welcher Nippel gerade in den Bereich der Anschläge geführt wird. Damit ist es möglich, unter Berücksichtigung des Seitenversatzes der Felgenlochung die Nippel beider Speichenreihen in eine solche Relativlage zu bringen, daß das Aufdrehen der Nippel zum Zwecke des Spannens an allen Nippeln eines Rades erfolgen kann. Der zusätzliche Anschlag ist auf der dem Monteur abgewandten Seite des V-förmigen Anschlages vorgesehen.

Die Nippelaufsetzstation, die Spannstation und/oder die Korrekturstation können höhenveränderlich an dem gemeinsamen Ständer vorgesehen sein. Damit ist es möglich, die einzelnen Stationen auf die Körpergröße des Monteurs individuell einzustellen, so daß ein ermüdungsfreies Arbeiten möglich wird.

Das Schraubwerkzeug der Spannstation weist eine hohle Klinge und eine darin geführte Seele aufweist, wobei der Überstand der Seele gegenüber der Klinge einstellbar ist. Genauer gesagt ist die relative Lage der Seele einstellbar. Dem der Klinge abgekehrten Ende der Seele ist ein Schalter für die Auslösung des Rückwärtshubes des Schraubwerkzeuges zugeordnet. Das Schraubwerkzeug ist an einem Schlitten höhenveränderlich geführt, also etwa in Richtung der Achse der jeweiligen Speiche, wobei der Schlitten über einen doppelt wirkenden Pneumatikzylinder während des Aufschraubvorganges vorwärts und während des Rückwärtshubes rückwärts bewegt wird. Durch den Pneumatikzylinder wird eine entsprechende Kraft in Aufschraubrichtung auf die Klinge des Schraubwerkzeuges ausgeübt, wie es erforderlich ist, um den Aufschraub- und Spannvorgang durchzuführen. Dieser Aufschraubvorgang gestaltet sich in der Weise, daß die Klinge des Schraubwerkzeuges ohne Unterbrechung angetrieben wird, sich also dreht. Dies ist auch während des Rückwärtshubes der Fall. Beim Absenken des Schlittens mit dem Schraubwerkzeug dringt das überstehende Ende der Seele in die Durchbrechung des Nippels ein. Dies wird unterstützt durch eine Führungseinrichtung, die zuvor den Kopf des Nippels fängt und an der rotierenden Bewegung nicht teilnimmt. Damit ist der Nippel relativ zur Klinge zentriert, und die Klinge des Schraubwerkzeuges kann bei ihrer Abwärtsbewegung in den Schlitz des Nippels eindringen. In der fortgesetzten Bewegung wird zunächst der Nippel nach unten auf die feststehende Speiche aufgedreht, wobei zunächst das Spiel verschwindet, mit welchem der in der Nippelaufsetzstation lose aufgedrehte Nippel über das Felgenbett der Felge vorstand. Sobald der Nippel mit seinem Nippelkopf auf das Felgenbett aufsetzt, wird zunächst die Abwärtsbewegung des Nippels unter entsprechender Deformation der Felge verlangsamt und schließlich zu einem Stillstand reduziert, wobei während dieser Aufschraubphase bereits ein Teil der Spannung auf die Speiche aufgebracht wird. Sobald der Nippel gleichsam ortsfest an der Felge sitzt und der Aufschraubvorgang weitergeführt wird, wandert nun relativ zu dem Nippel das Speichenende in dem Nippel immer weiter hoch, bis es dort auf das untere Ende der Seele trifft und die Seele relativ zum Schraubwerkzeug angehoben wird. Dieser Anhebevorgang der Seele wird unter Berücksichtigung des Schaltweges auf den Schalter so übertragen, daß insbesondere der pneumatische Zylinder im Sinne der Auslösung seines Rückwärtshubes eingeschaltet wird und damit der Aufschraubvorgang des betreffenden Nippels beendet wird. Es ist also die durch das gewählte Maß festgelegte Relativlage zwischen Nippel und Speichenende erreicht, und die Speiche steht unter der gewünschten Zugspannung. Durch die beiden Ausrichtrollen in der Spannstation wird für den jeweils individuell aufgedrehten Nippel ein geometrisches Dreieck gebildet, innerhalb dessen die relative Lage des Nippels zum Speichenende festgelegt wird. Dies ist für jeden einzelnen Nippel der Fall, wobei durch die relativ weit auseinanderliegenden Punkte der Ausrichtrollen eine hohe Genauigkeit erreicht wird, was letztlich maßgebend für die Qualität des Zusammenbaus und den erreichten Rundlauf ist. Dabei ist es natürlich sinnvoll, die Speichen nicht in ununterbrochener Reihe über den Umfang zu behandeln, sondern beispielsweise zunächst zwei bezüglich der Felgenlochung benachbarten Speichen zu spannen, dann folgende Speichen ungespannt zu lassen und wiederum zwei benachbarte Speichen zu spannen, damit so schrittweise über den Umfang die erforderliche Spannung aufgebaut wird. Um das gemeinsam angewendete und festgelegte Maß einstellen zu können, ist die Seele mit einer Einstelleinrichtung für ihre wirksame Länge relativ zum Schalter versehen. Das Maß richtet sich nach der Anordnung der Ausrichtrollen. Die Ausrichtrollen sind selbst wiederum relativ zur Klinge des Schraubwerkzeuges verstellbar bzw. einstellbar. Insoweit ist das Maß auch von der Lage der Ausrichtrollen abhängig. Durch die Einstellung der Ausrichtrollen relativ zu dem V-förmigen Anschlag wird gleichsam eine Grundeinstellung gewählt, während die Einstelleinrichtung für die Veränderung der wirksamen Länge der Seele eine Feineinstelleinrichtung für dieses Maß bildet. Es ist erkennbar, daß in einem relativ großen Dreieck zwischen den beiden Ausrichtrollen und dem V-förmigen Anschlag die relative Endlage jedes aufgeschraubten Nippels zum Speichenende reproduzierbar eingestellt wird. Da dies über den gesamten Umfang des Rades geschieht, werden Höhen- und Seitenschläge weitgehend vermieden, und es ergibt sich die hohe Rundheit der gespannten Felge relativ zur Achse der Nabe.

Die Ausrichtrollen für die Felge sind somit höheneinstellbar und ggfs. horizontal ausrichtbar angeordnet. Diese Höheneinstellbarkeit ist für unterschiedliche Radgrößen erforderlich. Auch bei unterschiedlicher Länge der Speichen jeder Speichenreihe ist diese Höheneinstellbarkeit nützlich. Die horizontale Ausrichtbarkeit kann dazu genutzt werden, um bei Verwendung von Hochflanschnaben die ungünstige Schräglage jeder Speiche relativ zu dem V-förmigen Anschlag zu minimieren oder ganz zu beseitigen.

Die Erfindung wird anhand eines bevorzugten Ausführungsbeispiels weiter erläutert und beschrieben. Es zeigen:
- Figur 1: eine Seitenansicht der Vorrichtung in Richtung I in Figur 4,
- Figur 2: eine Seitenansicht der Vorrichtung in Richtung II in Figur 4,
- Figur 3: eine Seitenansicht der Vorrichtung in Richtung III in Figur 4,
- Figur 4: eine Draufsicht auf die Vorrichtung von oben,
- Figur 5: eine Detailansicht der wesentlichen Elemente der Spannstation,

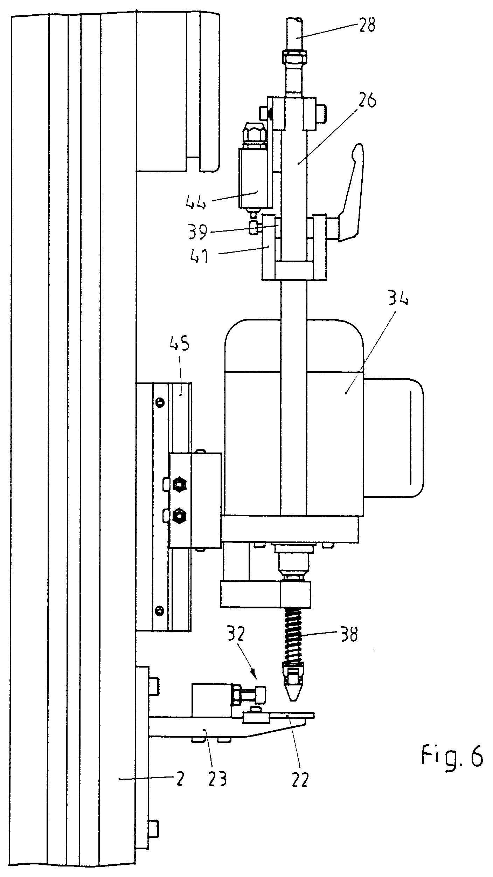

- Figur 6: eine Seitenansicht der Elemente gemäß Figur 5,

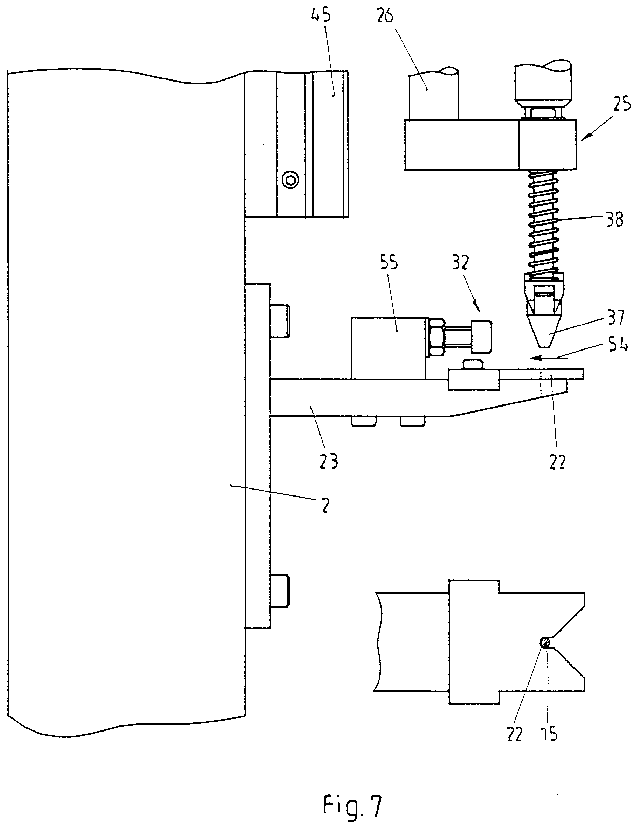

- Figur 7: eine vergrößerte Detaildarstellung aus Figur 6,
- Figur 8: die Darstellung gemäß Figur 7 beim Spannen einer Speiche der einen Speichenreihe,
- Figur 9: die Darstellung gemäß Figur 7 beim Spannen einer Speiche der anderen Speichenreihe und
- Figur 10: eine vergrößerte Detaildarstellung aus Figur 5.

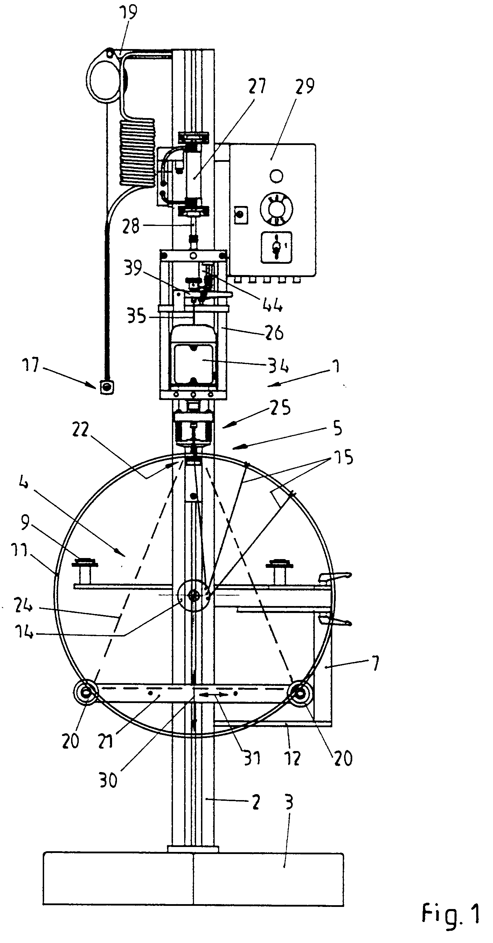

Die Vorrichtung mit ihren verschiedenen Stationen ist an einem gemeinsamen Ständer 1 angeordnet, der als wesentliche Elemente eine vertikale Säule 2 und einen Fuß 3 aufweist. Wie die Figuren 1 bis 4 erkennen lassen, sind an der Säule 2 in entsprechender Verteilung eine Nippelaufsetzstation 4, eine Spannstation 5 und eine Korrekturstation 6 untergebracht.

Die Nippelaufsetzstation 4 dient nur dazu, die Nippel auf die mit Gewinde versehenen Speichenenden um einige wenige Umdrehungen und ohne Entstehung von Spannung in der Speiche aufzudrehen, nachdem die Speichenenden durch die Lochung der Felge hindurchgesteckt sind. Die Spannstation 5 dient dazu, die Nippel weiter aufzudrehen und dabei Spannung auf die Felgen aufzubringen, so daß das Rad seine gespannte Gestalt bekommt. Die Korrekturstation dient zur Nacharbeit und zur Beseitigung etwaiger Höhen- und Seitenschläge.

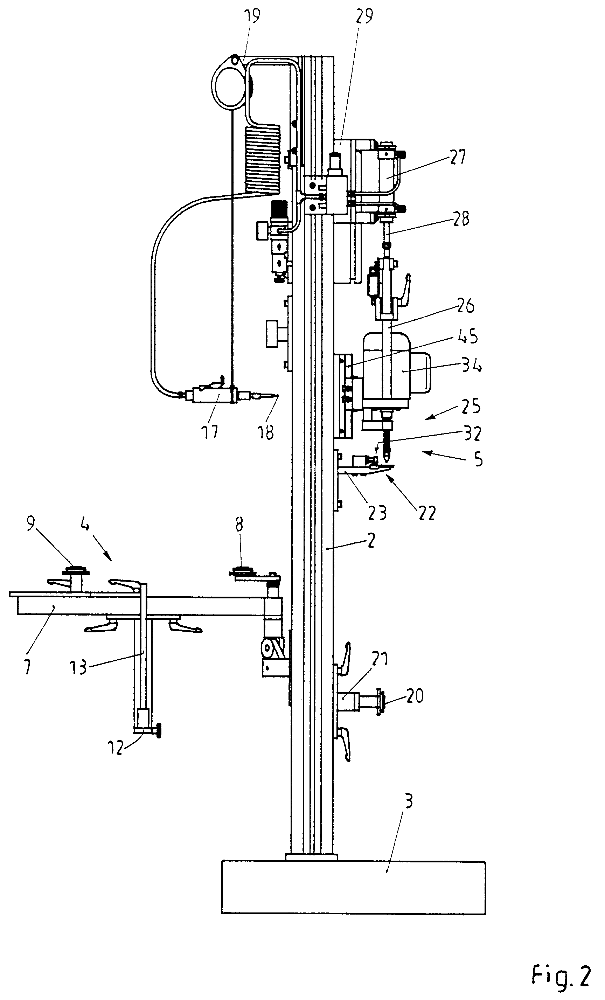

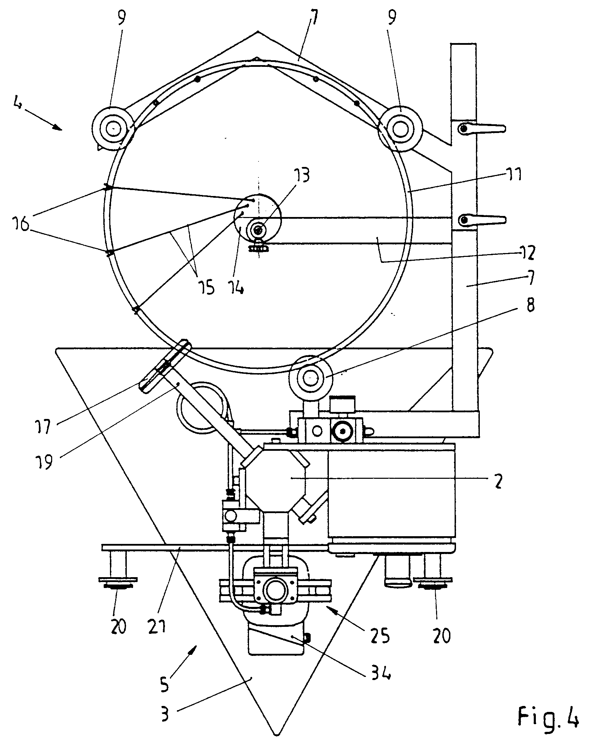

Die Nippelaufsetzstation 4 mit ihren wesentlichen Elementen sei anhand der Figuren 2 und 4 erläutert. Wesentliches Element der Nippelaufsetzstation 4 ist ein horizontal von der Säule 2 ausladendes mehrteiliges Gestell 7, an dem eine erste Aufnahmerolle 8 ortsfest angeordnet ist. An einem weiteren Teil des Gestells 7 sind zwei Aufnahmerollen 9 drehbar gelagert, wobei diese beiden Aufnahmerollen 9 mit dem zugehörigen Teil des Gestells 7 in Richtung eines Pfeils 10 einstellbar gelagert sind. Die Aufnahmerollen 8 und 9 dienen der horizontalen Auflagerung einer Felge 11. Um unterschiedliche Radgrößen bzw. Felgengrößen aufnehmen zu können, sind die beiden Aufnahmerollen 9 in Richtung des Pfeiles 10 verschiebbar. Das Gestell 7 weist auch einen ebenfalls in Richtung des Pfeiles 10 verstellbaren Arm 12 auf, der eine vertikal ausgerichtete, hohle Stange 13 trägt, die zur losen Aufnahme der Achse einer Nabe 14 dient. Die Verstellbarkeit des Armes 12 in Richtung des Pfeiles 10 dient der ungefähren Positionierung der Nabe 14 im Zentrum der Aufnahmerollen 8 und 9. Die Speichen 15, von denen nur einige wenige dargestellt sind, werden in bekannter Weise durch die Lochungen der Nabe 14 eingefädelt, was auch in einem vorgeschalteten Arbeitsgang geschehen kann, und durch das für jede Speiche 15 vorgesehene Loch der Lochung der Felge 11 hindurchgesteckt. Von außen wird ein Nippel 16 um einige wenige Umdrehungen auf das mit Gewinde versehene Ende der Speiche 15 im Bereich der Felge 11 aufgedreht, bis das im Innern des Nippels vorgesehene Gewinde gefaßt hat. Zum Aufdrehen der Nippel 16 wird zweckmäßig ein Schrauber 17 mit Klinge 18 benutzt, der an einem Kragarm 19 der Säule 2 in Reichweite zu der Nippelaufsetzstation 4 aufgehängt ist. Der Schrauber 17 wird elektromotorisch betrieben. Das Aufdrehen der Nippel 16 auf die Enden der Speichen 15 geschieht nacheinander in der Weise, daß jede Speiche 15 beider Speichenreihen mit je einem Nippel 16 ausgestattet ist, wobei sämtliche Speichen 15 ohne Spannung verbleiben, so daß die Nabe 14 nur locker und in etwa im Zentrum der Felge 11 gehalten ist. Es versteht sich, daß bei Herstellung eines Satzes von Laufrädern zweckmäßigerweise zunächst sämtliche Laufräder in der beschriebenen Weise in der Nippelaufsetzstation 4 behandelt bzw. ausgerüstet werden.

Das so vorbereitete Rad wird dann in die Spannstation 5 überführt, deren wesentliche Elemente anhand der Figur 1 verdeutlicht werden sollen. Die Spannstation 5 weist zwei Ausrichtrollen 20 auf, die an einem Träger 21 drehbar angeordnet sind. Die Anordnung ist so getroffen, daß sich die Ausrichtrollen 20 in einer symmetrischen Anordnung durch eine Vertikalmittelebene durch die Achse der Säule 2 befinden. Damit fällt die Achse der Nabe 14 in diese Vertikalmittelebene. Den beiden Ausrichtrollen 20 zugeordnet ist ein V-förmiger Anschlag 22 ortsfest an einem Ausleger 23 der Säule 2 vorgesehen. Durch die beiden Ausrichtrollen 20 und den Anschlag 22 wird ein relativ groß dimensioniertes Dreieck 24 gebildet, das in Figur 1 in gestrichelter Linienführung verdeutlicht ist. Dieses Dreieck 24 ist wesentlich für die Qualität und Präzision des Spannvorganges an jedem einzelnen Nippel 16. Wie später noch ausführlich erläutert wird, wird jeder einzelne Nippel 16 gemäß dem Dreieck 24 gewollt in eine reproduzierbare und über den Umfang an jedem Nippel 16 eingehaltene Relativlage zu den Ausrichtrollen 20 und damit zu Umfangspunkten an der Felge 11 gebracht. Dies ermöglicht ein sehr genaues Rundspannen des Rades, also die Anordnung der Felge 11 relativ zur Nabe 14, obwohl die Nabe 14 (Figur 1) letztlich keinen Bezugspunkt in dem Dreieck 24 bildet und ihre zentrische Lage beim fortgesetzten Spannvorgang an den Nippeln gleichsam selbsttätig korrigierend einnimmt. Auch hier sind nur einige wenige Speichen 15 dargestellt. Zum weiteren Aufschrauben der Nippel 16 dient ein Schraubwerkzeug 25, welches mit vertikal ausgerichteter Rotationsachse an einem Schlitten 26 angeordnet ist, der in vertikaler Richtung verfahrbar an der Säule 2 gelagert ist. Um den Schlitten 26 mit dem Schraubwerkzeug 25 nach unten zu bewegen (Vorwärtsgang) ist ein doppelt wirkender Zylinder 27 an der Säule 2 gelagert, dessen Kolbenstange 28 mit dem Schlitten 26 verbunden ist. Der Zylinder 27 dient auch für den Rückhub des Schraubwerkzeuges 25, also das Anheben des Schraubwerkzeuges nach oben nach beendetem Spannvorgang an jedem einzelnen Nippel 16. Der doppelt wirkende Zylinder 27 kann pneumatisch angesteuert werden. Hierzu dient eine entsprechende Steuereinheit 29. Die Steuereinheit 29 nimmt auch die elektrische Versorgung der Vorrichtung auf.

Der Träger 21 mit den beiden Ausrichtrollen 20 ist an der Säule 2 höhenveränderlich in Richtung des Doppelpfeils 30 gelagert, um unterschiedlichen Radgrößen Rechnung tragen zu können, da der V-förmige Anschlag 22 ortsfest an der Säule angeordnet ist. Aus Figur 1 ist auch bereits erkennbar, daß die Achse der Speiche 15, auf die der Nippel 16 gerade aufgedreht wird, zu der Vertikalachse des Schraubwerkzeuges 25 etwas schräg steht. Diese Schräglage wird bei Hochflanschnaben besonders groß. Um diese Schräglage zu verkleinern und damit einen besseren und sicheren Angriff der Klinge des Schraubwerkzeuges 25 an der Schlitzung jedes Nippels zu ermöglichen, kann der Träger 21 und damit die auf ihm sitzenden Ausrichtrollen 20 auch in Richtung eines Doppelpfeils 31 an der Säule verstellbar sein, so daß eine Einstellung möglich wird, in der zwar die Achse der Nabe 14 außerhalb der zuvor beschriebenen Vertikalebene zu liegen kommt, jedoch die einzelne Speiche 15 der betreffenden Speichenreihe unter Berücksichtigung des Drehsinns in eine vorteilhaft vertikale Ausrichtung gerät. Aber auch in einer dazu um 90° gedrehten Ebene steht an sich jede Speiche 15 zu der Achse des Schraubwerkzeuges 25 schräg, wobei sich unterschiedliche Schräglagen für die beiden Speichenreihen ergeben, die von der linken Seite bzw. von der rechten Seite der Nabe ausgehen. Im allgemeinen genügt es für die gewünschte Genauigkeit der Montage, den V-förmigen Anschlag 22 als Bezugspunkt in Verbindung mit den Ausrichtrollen 20 für die Errichtung des Dreiecks 24 zu wählen und insoweit beide Speichenreihen zwar mit jeweils unterschiedlicher Schräglage zur Achse des Schraubwerkzeuges 25 zu spannen. Es gibt jedoch noch eine weitere Möglichkeit, die Speichenreihen von links und rechts der Nabe jeweils unterschiedlich zu behandeln. Hierzu ist ein zweiter, einstellbarer Anschlag 32 (Figur 2) relativ zu dem V-förmigen Anschlag 22 vorgesehen. Der Anschlag 22 arbeitet mit dem jeweiligen Nippel 16 zusammen, während der Anschlag 32 mit der Felge zusammenarbeitet, jedoch so eingestellt ist, daß die Nippel der betreffenden Nippelreihe in die gewünschte Relativlage zu der Achse des Schraubwerkzeuges 25 gelangen.

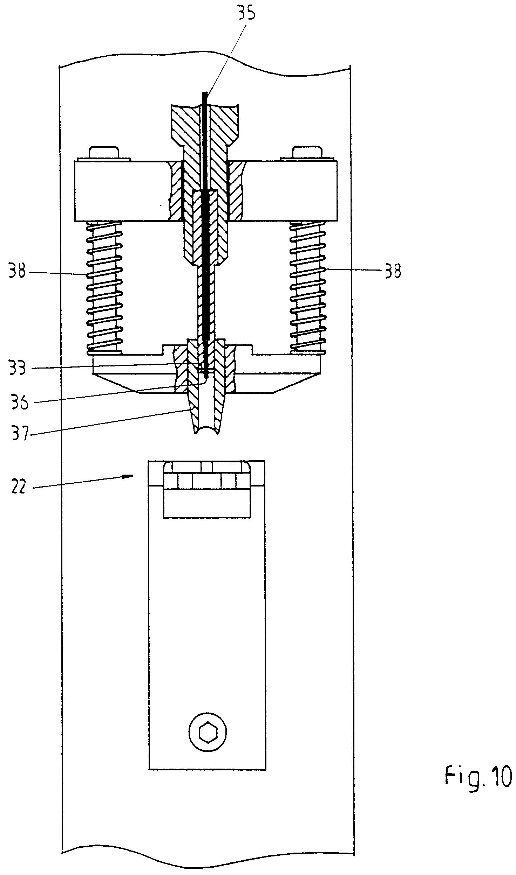

Das Schraubwerkzeug 25 weist eine hohle Klinge 33 (Figur 10) auf, die über einen Motor 34 während des Spannens mehrerer Nippel bzw. Speichen kontinuierlich angetrieben wird. Die Klinge 33 wird von einer stillstehend angeordneten Seele 35 durchsetzt, deren unteres Ende 36 die Klinge 33 überragt. Die Klinge 33 ist in einem Zentrierfänger 37 für den jeweiligen Nippel 16 gelagert. Der Zentrierfänger 37 ist mit Hilfe von Federn 38 vertikal ausweichbar zur Klinge 33 des Schraubwerkzeuges 25 gelagert. Er dient dazu, daß beim Vorwärtshub des Schraubwerkzeuges 25 der Zentrierfänger 37 den jeweiligen Nippel 16 in eine solche Relativlage bringt und festhält, daß das vorstehende Ende 36 der Seele 35 zunächst in die axiale Durchbrechung des Nippels 16 eintreten und sodann die Klinge 33 bei fortgesetztem Abwärtshub in die Schlitzung des Nippels eingreifen kann, so daß die Klinge 33 dann ihre Drehbewegung auf den Nippel 16 überträgt. Damit diese Drehbewegung ordnungsgemäß geschehen kann, lastet die Kraft des Zylinders 27 nach unten gerichtet auf dem jeweiligen Nippel 16.

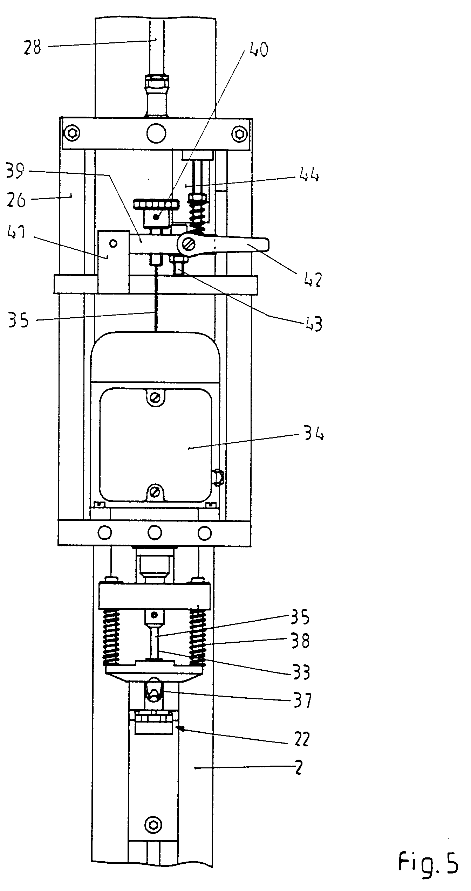

Wie Figur 1 erkennen läßt, ist die Antriebswelle des Motors 34 durchgehend hohl ausgebildet. Durch diese Höhlung erstreckt sich die Seele 35 hindurch. Sie endet an einer Wippe 39 (Figur 5) und ist mit ihrem nach oben reichenden Ende in einer Justierschraube 40 festgelegt, die ihrerseits mit Hilfe eines Gewindes in der Wippe 38 verstellbar angeordnet ist. Es ist erkennbar, daß damit die relative wirksame Länge der Seele 35 und damit letztlich der Abstand des unteren Endes 36 der Seele 35 von den beiden Ausrichtrollen 20 einstellbar ist. Die Wippe 39 ist in einem Lager 41 schwenkbar gelagert. Ein Hebelspanner 42 dient zum Klemmen der Justierschraube 40 in der jeweils eingestellten Stellung. An der Wippe 39 ist ein einstellbarer Anschlag 43 vorgesehen, mit dem die Schwenkbarkeit der Wippe 39 und damit die Einstellung des unteren Endes 36 der Seele 35 in Abwärtsrichtung begrenzt wird. Der Anschlag 43 ist gleichzeitig einem Schalter 44 zugeordnet, der beim Anheben der Seele 35 und damit beim Aufwärtsschwenken der Wippe 39 einen Schaltimpuls am Schalter 44 auslöst, der zum Auslösen des Rückwärtshubes des Zylinders 37 genutzt wird. Diese Aufwärtsbewegung der Seele 35 wird durch jede Speiche 15 relativ zu ihrem zugehörigen Nippel 16 ausgelöst. Im Einzelnen gestaltet sich ein Spannvorgang eines Nippels 16 an einer Speiche 15 wie folgt:
Das auf den Ausrichtrollen 20 ausgerichtete Rad wird mit seiner Felge 11 in den Bereich des V-förmigen Anschlages 22 verschwenkt, wodurch der Nippel 16 an dem V-förmigen Anschlag 22 zur Anlage kommt und damit die gemeinsame Achse des Nippels 16 und der Speiche 15 relativ zu der Vertikalachse des Schraubwerkzeuges 25 festlegt. Durch einen hier nicht dargestellten Fußschalter o. dgl. wird nun der Abwärtshub des Zylinders 27 ausgelöst, so daß der Schlitten 26 mit dem darauf gelagerten Motor und der gesamten Schalteinrichtung einschließlich der Wippe 39 und des Schalters 44 nach unten fahren. Dabei setzt der Zentrierfänger 37 auf dem Kopf des Nippels 16 auf, der oberhalb der Felge 11 durch diese hindurchragt. Der Zentrierfänger 37, der nicht rotiert, bleibt dann ortsfest stehen, während sich die hohle Klinge 33 und die Seele 35 in fortgesetzter Abwärtsbewegung des Schlittens 26 weiter absenken, bis das vordere Ende 36 der Seele 35 in die Höhlung des Nippels 16 eintritt. Damit wird der Nippel zusätzlich zentriert, und bei weiter fortgesetzter Abwärtsbewegung tritt die Klinge 33 in die Schlitzung des Nippels 16 ein und überträgt ihre Drehbewegung auf den Nippel. Dabei wird zunächst die Abwärtsbewegung fortgesetzt, und zwar in dem Maße, in dem der Nippel auf die stillstehende Speiche 15 aufgedreht wird. Dabei wird das Spiel beseitigt, mit dem der Nippel gegenüber der Lochung an der Felge überstand. Sobald der Nippel auf die Felge 11 aufsetzt, wird die Felge im elastischen Bereich etwas zusammengedrückt und sodann die Abwärtsbewegung des Nippels beendet. Die Speiche 15 gerät dann unter Spannung, und der sich drehende Nippel hebt die Speiche relativ nach oben an, so daß das obere Ende der Speiche 15 in dem Nippel 16 nach aufwärts wandert, bis es sich an dem unteren Ende 36 der Seele 35 anlegt und die Seele 35 anhebt. Damit wird die Wippe 39 nach oben verschwenkt, der Schaltweg des Schalters 44 überbrückt und der Schaltimpuls ausgelöst, so daß der Rückwärtshub auf den pneumatischen Zylinder 27 ausgesteuert wird. Hierdurch fährt die sich drehende Klinge 33 aus dem Nippel 16 aus, und der Aufschraubvorgang und der Spannvorgang ist beendet. Der einzelne Nippel 16 ist relativ zur Speiche 15 im Dreieck 24 zu den Ausrichtrollen 20 geometrisch mit großer Genauigkeit und Reproduzierbarkeit festgelegt. Hieraus ergibt sich eine hohe Rundheit des gespannten Rades, wenn sämtliche Nippel 16 in der eben beschriebenen Weise festgezogen sind.

Der Schlitten 26 mit dem Motor 34 und dem Schraubwerkzeug 25 ist an einer Führungsschiene 45 (Figur 2) vertikal geführt.

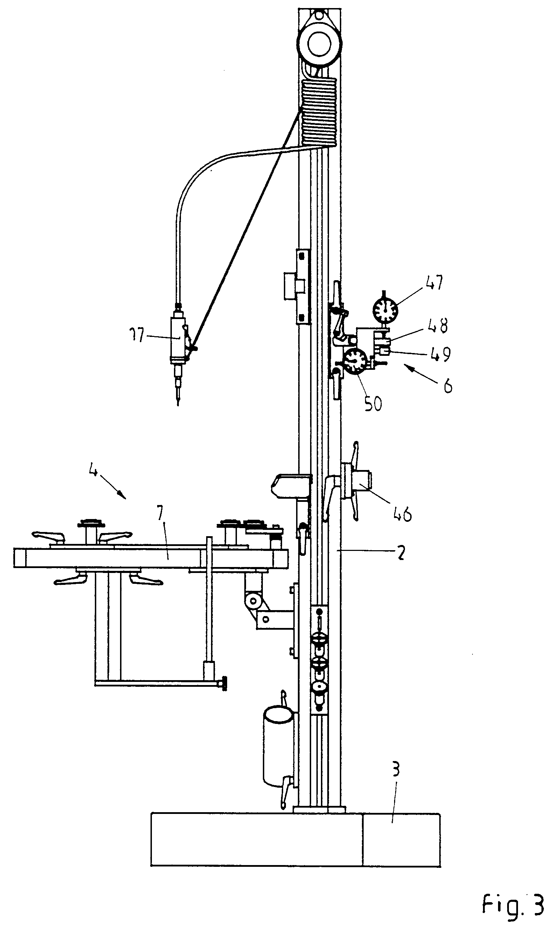

Die Korrekturstation 6 gemäß Figur 3 weist als wesentliche Elemente eine Spannzange 46 auf, in der die Achse der Nabe 14 horizontal ausgerichtet aufgenommen und eingespannt wird. Zur Spannstation gehört eine Anzeigeeinrichtung 47 für den Höhenschlag, der eine Wippe 48 mit Rolle 49 vorgeschaltet ist, so daß die Rolle 49 auf der Felge 11 abrollt und insoweit einen Höhenschlag auf die Anzeigeeinrichtung 47 überträgt. In ähnlicher Weise ist eine Anzeigeeinrichtung 50 für den Seitenschlag der Felge 11 vorgesehen. In dieser Korrekturstation 6 wird der betreffende Nippel in Handarbeit gelöst bzw. fester gespannt, wie es für die erforderliche Korrektur notwendig ist, um einen Seiten- und/oder Höhenschlag zu beseitigen. Im allgemeinen ist die Genauigkeit der Spannvorrichtung bereits so gut, daß nur in Ausnahmefällen eine Korrektur erfolgen muß.

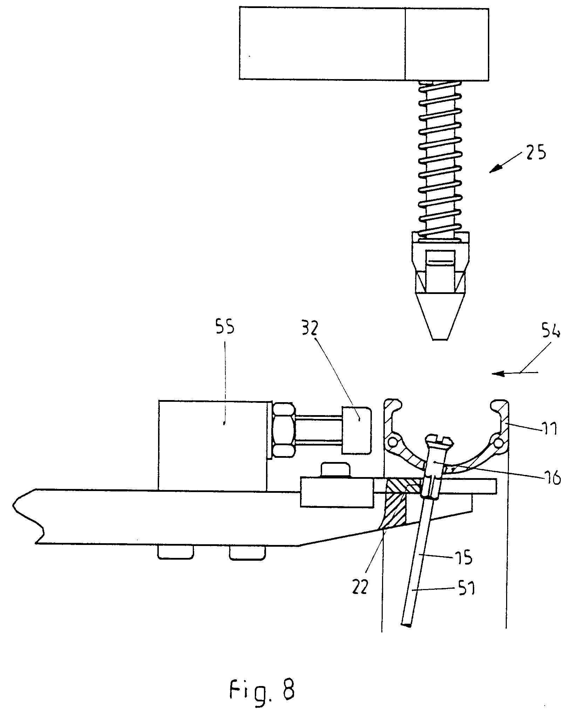

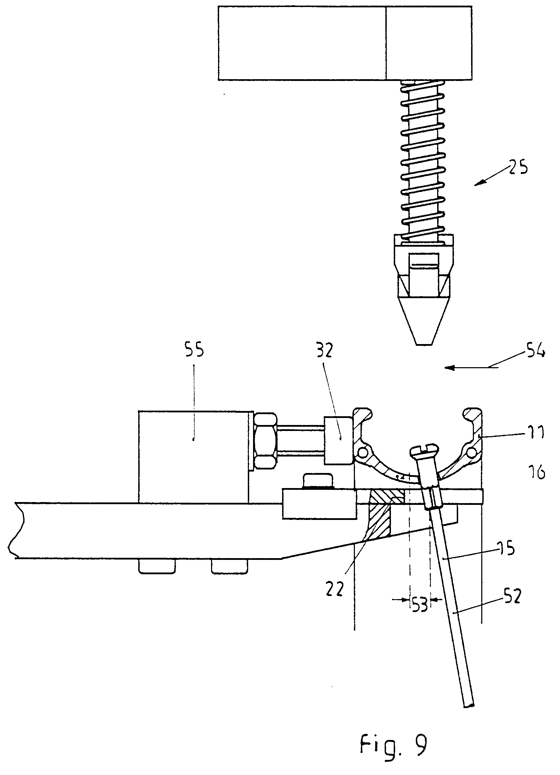

In den Figuren 8 und 9 ist die jeweilige Relativlage der Speichen einer linken Speichenreihe 51 und einer rechten Speichenreihe 52 dargestellt. Die eine Speichenreihe 51 kommt von der linken Seite der Nabe 14, während die andere Speichenreihe von der rechten Seite der Nabe 45 kommt. Insoweit weisen die jeweiligen Nippel 16 der verschiedenen Speichenreihen 51 und 52 unterschiedliche Schräglagen auf, die noch durch den Lochversatz 53 überlagert bzw. beeinflußt werden. Unter dem Lochversatz 53 ist der Abstand der Mitten der Löcher für die linke Speichenreihe 51 zu den Mitten der Löcher für die rechte Speichenreihe 52 zu verstehen. Um diesen unterschiedlichen Schräglagen genüge zu tun, arbeitet der Anschlag 22 mit der einen Speichenreihe 51 zusammen, d. h. er positioniert hier die jeweilige Speiche 15 mit dem jeweiligen Nippel 16 relativ zu der Vertikalachse des Schraubwerkzeuges 25. Die andere Speichenreihe 52 wird dagegen über den Anschlag 32, an dem die Felge 11 zur Anlage kommt, positioniert. Wie ersichtlich, positioniert sich jede Speiche 15 selbst relativ zur Achse des Schraubwerkzeuges 25, wenn die Felge in Richtung des Pfeils 54 gegen einen der beiden Anschläge 22 oder 32 geführt wird. Der jeweils zuerst wirksam werdende Anschlag 22 oder 32 bestimmt die relative Lage. Der Anschlag 32 stellt gleichzeitig einen Sicherheitsanschlag dar. Falls das Rad in einer nicht sachgemäßen Relativlage gemäß Pfeil 54 verschwenkt wird, so daß keine der Speichen 15 bzw. Nippel 16 in dem V-förmigen Anschlag 22 gefangen wird, verhindert der Anschlag 32 ein weiteres Durchschieben der Felge 11 gemäß Pfeil 54 mit der Folge, daß die Hände des Monteurs in den Bereich des Schraubwerkzeuges 25 gelangen könnten, wodurch Verletzungen durch die niedergehende Klinge 33 die Folge sein könnten. All dies wird durch den Anschlag 32 verhindert. Der Anschlag 32 ist als konterbare Schraube ausgebildet und an einem Lager 55 aufgenommen. Er wird relativ zu dem Anschlag 22 eingestellt, und zwar je nach der Art der montierten Felge 11. Insbesondere bei Verwendung von Aluminiumfelgen sind beide Anschläge 22 und 32 erforderlich, weil die Felge 11 auf keinen Fall von oben auf den Anschlag 22 gedrückt werden darf, auch nicht in dem Augenblick, in welchem sie Spannung erhält.

### BEZUGSZEICHENLISTE

- 1: - Ständer
- 2: - Säule
- 3: - Fuß
- 4: - Nippelaufsetzstation
- 5: - Spannstation
- 6: - Korrekturstation
- 7: - Gestell
- 8: - Aufnahmerolle
- 9: - Aufnahmerolle
- 10: - Pfeil
- 21: - Träger
- 22: - Anschlag
- 23: - Ausleger
- 24: - Dreieck
- 25: - Schraubwerkzeug
- 26: - Schlitten
- 27: - Zylinder
- 28: - Kolbenstange
- 29: - Steuereinheit
- 30: - Doppelpfeil
- 41: - Lager
- 42: - Hebelspanner
- 43: - Anschlag
- 44: - Schalter
- 45: - Führungsschiene
- 46: - Spannzange
- 47: - Anzeigeeinrichtung
- 48: - Wippe
- 49: - Rolle
- 50: - Anzeigeeinrichtung
- 11: - Felge
- 12: - Arm
- 13: - Stange
- 14: - Nabe
- 15: - Speiche
- 16: - Nippel
- 17: - Schrauber
- 18: - Klinge
- 19: - Kragarm
- 20: - Ausrichtrolle
- 31: - Doppelpfeil
- 32: - Anschlag
- 33: - Klinge
- 34: - Motor
- 35: - Seele
- 36: - Ende
- 37: - Zentrierfänger
- 38: - Feder
- 39: - Wippe
- 40: - Justierschraube
- 51: - l. Speichenreihe
- 52: - r. Speichenreihe
- 53: - Lochversatz
- 54: - Pfeil
- 55: - Lager

## Patentansprüche

1. Verfahren zum Zusammenbau eines Rades aus einer Felge (11), einer Nabe (14) und einer Mehrzahl von Speichen (15) und Nippeln (16), indem die Speichen (15) durch Löcher in der Nabe (14) und in der Felge (11) hindurchgeführt und die Nippel (16) auf die mit Gewinde versehenen Enden der Speichen (15) aufgedreht werden, **dadurch gekennzeichnet**, daß die Nabe (14) und die Felge (11) in einer Nippelaufsetzstation (4) zunächst in eine ungefähr konzentrische Relativlage zueinander gebracht und die Nippel (16) auf die mit Gewinde versehenen Enden der durch die Löcher in der Nabe (14) und der Felge (11) hindurchgeführten Speichen (15) nur um einige wenige Umdrehungen aufgedreht werden, daß die so vormontierte Einheit ohne Fixierung der Nabe (14) lediglich mittels der Felge (11) für jede Speiche (15) einzeln nacheinander relativ zu einem Schraubwerkzeug (25) mit Klinge (33) so ausgerichtet wird, daß die Achse der jeweiligen Speiche (15) mit der Achse der Klinge (33) des Schraubwerkzeuges (25) in etwa fluchtet, und daß in jeder der ausgerichteten Relativlagen der jeweilige Nippel (16) unter Entstehen von Spannung am freien Ende der jeweiligen Speiche (15) individuell fertig derart weiter aufgedreht wird, daß alle Nippel (16) oder zumindest alle Nippel einer Radseite um ein vorher festgelegtes gemeinsames Maß auf die Enden ihrer zugehörigen Speichen (15) aufgedreht sind.

2. Verfahren nach Anspruch 1, **dadurch gekennzeichnet**, daß die Räder satzweise eingespeicht werden und daß nach einer Kontrolle des zuerst eingespeichten Rades das vorher festgelegte gemeinsame Maß ggfs. korrigiert wird.

3. Verfahren nach Anspruch 1 oder 2, **dadurch gekennzeichnet**, daß am Ende des Einspeichens das Rad auf einen Höhen- und Seitenschlag überprüft und ggfs. individuell korrigiert wird.

4. Vorrichtung zur Durchführung des Verfahrens nach den Ansprüchen 1 bis 3, mit einer Nippelaufsetzstation (4), einer Spannstation (5) und einer Korrekturstation (6), **dadurch gekennzeichnet**, daß die Nippelaufsetzstation (4) eine Aufnahmeeinrichtung zum ungefähren Festlegen der Achse der Nabe (14), Führungsrollen (8, 9) für die ungefähre Zentrierung der Felge (11) relativ zur Achse der Nabe (14) sowie einen Schrauber (17) zum Aufdrehen der Nippel (16) um einige wenige Umdrehungen aufweist, daß die Spannstation (5) zwei Ausrichtrollen (20) für die Felge (11) und einen V-förmigen Anschlag (22) für die Positionierung des jeweiligen Nippels (16) mit Speiche (15) mit ihrer Achse relativ zu der Achse der Klinge (33) eines Schraubwerkzeuges (25) aufweist, und daß das Schraubwerkzeug mit einer Einstellvorrichtung (35, 40, 44) zur Beendigung des Aufdrehvorgangs beim Erreichen einer vorher festgelegten Relativlage zwischen Speichenende und Nippel (16) versehen ist.

5. Vorrichtung nach Anspruch 4, **dadurch gekennzeichnet**, daß die Nippelaufsetzstation (4) im wesentlichen horizontal ausgerichtet und damit mit etwa vertikaler Achse der Nabe (14), die Spannstation (5) im wesentlichen vertikal ausgerichtet und damit mit etwa horizontaler Achse der Nabe sowie die Korrekturstation (6) an einem gemeinsamen Ständer (1) angeordnet sind.

6. Vorrichtung nach Anspruch 4 oder 5, **dadurch gekennzeichnet**, daß die Korrekturstation (6) eine Spanneinrichtung (46) zur Aufnahme der Achse der Nabe (14) und je eine Anzeigeeinrichtung (47, 50) für den Höhenschlag und für den Seitenschlag aufweist.

7. Vorrichtung nach Anspruch 4 bis 6, **dadurch gekennzeichnet**, daß das Schraubwerkzeug (25) der Spannstation (5) mit vertikal angeordneter Achse an dem gemeinsamen Ständer (1) vorgesehen ist.

8. Vorrichtung nach Anspruch 4 bis 7, **dadurch gekennzeichnet**, daß dem V-förmigen Anschlag (22) für die Positionierung des jeweiligen Nippels (16) mit Speiche (15) für die Speichen der einen Laufradseite mit ihrer Achse relativ zu der Achse der Klinge (33) des Schraubwerkzeuges (25) ein einstellbarer Anschlag (32) für die Felge (11) und damit für die Speichen (15) der anderen Laufradseite zugeordnet ist.

9. Vorrichtung nach Anspruch 4 bis 6, **dadurch gekennzeichnet**, daß die Nippelaufsetzstation (4), die Spannstation (5) und/oder die Korrekturstation (6) höhenveränderlich an dem gemeinsamen Ständer (1) vorgesehen sind.

10. Vorrichtung nach Anspruch 4, **dadurch gekennzeichnet**, daß das Schraubwerkzeug (25) der Spannstation (5) eine hohle Klinge (33) und eine darin geführte Seele (35) aufweist, und daß der Überstand der Seele (35) gegenüber der Klinge (33) einstellbar ist.

11. Vorrichtung nach Anspruch 10, **dadurch gekennzeichnet**, daß dem der Klinge (33) abgekehrten Ende der Seele (35) ein Schalter (44) für die Auslösung des Rückwärtshubes des Schraubwerkzeuges (25) zugeordnet ist.

12. Vorrichtung nach den Ansprüchen 10 und 11, **dadurch gekennzeichnet**, daß die Seele (35) mit einer Einstelleinrichtung (39, 40) für ihre wirksame Länge relativ zum Schalter (44) versehen ist.

13. Vorrichtung nach den Ansprüchen 4 und 8, **dadurch gekennzeichnet**, daß die Ausrichtrollen (20) für die Felge (11) höheneinstellbar und ggfs. horizontal ausrichtbar angeordnet sind.
